(19) **Europäisches Patentamt / European Patent Office / Office européen des brevets**

(11) **EP 4 024 395 B1**

(12) **EUROPEAN PATENT SPECIFICATION**

(45) Date of publication and mention
of the grant of the patent:
**07.08.2024 Bulletin 2024/32**

(21) Application number: **21210179.4**

(22) Date of filing: **24.11.2021**

(51) International Patent Classification (IPC):
**G10L 25/00** *(2013.01)*    **G10L 25/03** *(2013.01)*
**G10L 25/30** *(2013.01)*

(52) Cooperative Patent Classification (CPC):
**G10L 25/00; G10L 25/03; G10L 25/30**

(54) **SPEECH ANALYSER AND RELATED METHOD**

SPRACHANALYSATOR UND ZUGEHÖRIGES VERFAHREN

ANALYSEUR DE LA PAROLE ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2020 DK PA202070881**

(43) Date of publication of application:
**06.07.2022 Bulletin 2022/27**

(73) Proprietor: **audEERING GmbH**
**82205 Gilching (DE)**

(72) Inventors:
 • **EYBEN, Florian**
  **82205 Gilching (DE)**
 • **SCHULLER, Björn**
  **82205 Gilching (DE)**
 • **TRIANTAFYLLOPOULOS, Andreas**
  **82205 Gilching (DE)**

(74) Representative: **Aera A/S**
**Niels Hemmingsens Gade 10, 5th Floor**
**1153 Copenhagen K (DK)**

(56) References cited:
**WO-A1-2019/246239    US-A1- 2017 256 254**

**Description**

The present disclosure relates to speech processing and related tools and methods, and systems in particular for analysing, monitoring and/or evaluating speech of one or more speakers. Thus, a speech analyser and related methods, in particular a method of determining a speaker metric, are provided.

BACKGROUND

The affective computing community has long searched for an efficient way to automatically identify speaker states and/or traits using a combination of multimodal information. Previous research in emotion expression and perception, for example, has shown that different modalities including visual, textual, and acoustic modalities play a role in effective speaker state and/or trait determination.

However, there exist numerous application scenarios where only a subset of those modalities is available.

US 2017/256254 A1 - HUANG YAN et al relates to the use of a modular model to process speech. Further, US 2017/256254 A1 relates to a deep learning based acoustic model comprising a stack of different types of neural network layers. The sub-modules of a deep learning based acoustic model can be used to represent distinct non-phonetic acoustic factors, such as accent origins e.g. native, non-native), speech channels e.g. mobile, bluetooth, desktop etc.), speech application scenario e.g. voice search, short message dictation etc.), and speaker variation e.g. individual speakers or clustered speakers), etc.

WO 2019/246239 A1 relates to systems and methods for assessing a mental state of a subject in a single session or over multiple different sessions, using for example an automated module to present and/or formulate at least one query based in part on one or more target mental states to be assessed. The query may be configured to elicit at least one response from the subject. The query may be transmitted in an audio, visual, and/or textual format to the subject to elicit the response. Data comprising the response from the subject can be received. The data can be processed using one or more individual, joint, or fused models. One or more assessments of the mental state associated with the subject can be generated for the single session, for each of the multiple different sessions, or upon completion of one or more sessions of the multiple different sessions.

SUMMARY

Accordingly, there is a need for systems, electronic devices, and methods with improved speaker metric determination/identification. It is an object of the invention to provide such a system and method. This object of the invention is solved by the independent claims. Specific embodiments are defined in the dependent claims.

A speech analyser is provided, the speech analyser comprising an input module for provision of speech data based on a speech signal; a primary feature extractor for provision of primary feature metrics of the speech data; a secondary feature extractor for provision of secondary feature metrics associated with the speech data; and a speech model module comprising a neural network with model layers including an input layer, one or more intermediate layers including a first intermediate layer, and an output layer for provision of a speaker metric.

The speech model module is optionally configured to condition one or a plurality of model layers, e.g. configured to condition an intermediate layer based on the secondary feature metrics for provision of output from the intermediate layer as input to the model layer after the intermediate layer in the neural network.

Also disclosed is a method of determining a speaker metric, the method comprising obtaining speech data; determining primary feature metrics based on the speech data; determining secondary feature metrics associated with the speech data; and determining a speaker state based on the primary feature metrics and the secondary feature metrics.

Determining a speaker metric comprises applying a speech model, the speech model comprising a neural network with a number of model layers including an input layer, one or more intermediate layers including a first intermediate layer, and an output layer. Applying the speech model comprises condition one or a plurality of model layers based on the secondary feature metrics, such as conditioning an intermediate layer based on the secondary feature metrics for provision of input to the model layer after the intermediate layer in the neural network.

It is an advantage of the present disclosure that speaker metrics such as speaker states (e.g. emotion, sleepiness, health states) and traits (e.g. age, dialect) can be determined from inputs of multiple modalities without the need for precise (temporal) alignments of the inputs across modalities

Further, the present disclosure provides an improved neural network model architecture which efficiently and asynchronously handles the fusion of a plurality of modalities. Further, the present disclosure provides improved accuracy of speaker metric modelling/determination by leveraging both textual and acoustic information and fusing them holistically and asynchronously on a plurality of neural network layers.

BRIEF DESCRIPTION OF THE DRAWINGS

The above and other features and advantages of the present invention will become readily apparent to those skilled in the art by the following detailed description of exemplary embodiments thereof with reference to the attached drawings, in which:

Fig. 1 schematically illustrates an exemplary speech analyser according to the present disclosure,
Fig. 2 schematically illustrates an exemplary speech analyser according to the present disclosure,
Fig. 3 illustrates exemplary conditioning of an input layer,
Fig. 4 illustrates exemplary conditioning of intermediate layers, and
Fig. 5 is a flow diagram of an exemplary method according to the present disclosure

DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A speech analyser is disclosed. The speech analyser may be implemented in an electronic device. The electronic device comprises an interface, a processor, and a memory. The electronic device may for example be or comprise a mobile phone, such as a smartphone, a computer, such as a laptop computer or PC, or a tablet computer. The electronic device may be a server device.

The speech analyser comprises an input module for provision of speech data based on a speech signal. The input module may form part of an interface of an electronic device. The input module is configured to receive a speech signal. The speech signal may be an audio stream fed in real-time to the input module. The speech signal may be retrieved from an audio file, e.g. stored in a memory.

The speech analyser comprises a primary feature extractor for provision of primary feature metrics of the speech data. The primary feature extractor is configured to determine or extract one or more primary feature metrics also denoted PFM_1, PFM_2, ..., PFM_NP, where NP is the number or primary feature metrics of the speech data. In other words, the primary feature metrics may be collectively denoted PFM =(PFM_1, PFM_2, ..., PFM_NP). In one or more exemplary speech analysers, the number NP of primary feature metrics may be in the range from one to 100 per frame, such as in the range from 20 to 50 primary feature metrics per frame. In one or more exemplary speech analysers, the primary feature metrics are fed directly as input variables to the input layer of the speech model.

A primary feature metric is indicative of a primary feature of the speech signal. The primary feature extractor may be an acoustic feature extractor configured for provision of acoustic features as primary feature metrics. In other words, the primary feature metrics may be acoustic feature metrics indicative of acoustic features of the speech signal.

In one or more exemplary speech analysers, the primary feature extractor may be a linguistic feature extractor configured for provision of linguistic features as primary feature metrics.

Acoustic features of the speech signal may include one or more of digital (quantised and sampled) audio samples, such as Pulse-Code-Modulation (PCM) features.

Acoustic features may include one or more spectrogram features such as one or more of log-Mel, log-Bark, Mel, or Bark scale spectra or linear magnitude spectra, e.g. derived via short-time Fourier Transformation (STFT).

Acoustic features may include one or more of chochleagrams, chromagrams (spectra on a musical semitone scale), and scaleogram features, e.g. from wavelet or gammatone transform.

Acoustic features may include one or more cepstral features, such as Mel-Frequency Cepstral Coefficients (MFCC) and/or Perceptual Linear Predictive Coding Cepstral Coefficients (PLP-CC).

Acoustic features may include one or more linear predictive coding (LPC) coefficients and/or the remaining LPC residual signal
Acoustic features may include one or more of glottal articulatory speech features, articulatory speech features, and voice quality features, such as Jitter, Shimmer, Harmonics-to-Noise Ratio, etc.

Acoustic features may include one or more spectral statistics features, such as one or more of Spectral Roll-off Point, Spectral Slope, and Spectral Entropy.

Acoustic features may include one or more spectral envelope features (e.g. Formants) and/or prosodic features, such as pitch, fundamental frequency, signal energy, intensity, loudness.

The acoustic features/acoustic feature metrics are normally computed over a fixed unit of time (=frame), which is typically in the range 20 ms to 60 ms. The number of frames is denoted as NF_PFM. A frame length/duration of 25 ms may be preferred. Frames may preferably overlap and are optionally sampled from the audio signal with a sampling frequency, e.g. in the range from 10 Hz to 1 KHz, such as about 100 Hz. In other words, the audio signal may be sampled every 10ms (corresponding to 100 frames per second). Such acoustic features are referred to as Low-Level Descriptor (LLD). Derivative features, such as the first or second order differences of the LLD features over successive frames may be included as acoustic features.

In one more exemplary speech analysers, acoustic feature metrics of a plurality of frames, such as in the range from NF_PFM=2 to NF_PFM=200 frames may be fed to the neural network of the speech model module. NF_PFM depends on the length of the input audio signal, such as NF_PFM = audio_length_seconds * 100 frames/second.

In one more exemplary speech analysers/methods, aggregate features or statistical functionals may be applied to the acoustic features and included in the acoustic feature metrics. The acoustic features/acoustic feature metrics are not limited to the above described, but can also include similar and related acoustic features. The acoustic features can be determined or extracted, e.g. with the primary feature extractor or secondary feature extractor, by an algorithm implemented in software which implements equations for the computation of the features from the audio signal (such as implementations of the Fast-Fourier Transform, signal energy computation, or formant and pitch tracking). Further, an acoustic feature metric can also be determined by a general mathematical function such as a linear combination (matrix multiplication) defined by predetermined parameters and taking the raw samples of the audio signal input or a magnitude spectrum vector as input arguments.

In one more exemplary speech analysers, the acoustic feature metrics may be the output of a neural network, such as a neutral network trained to predict the fundamental frequency of a voiced sound from audio input, or the output of an intermediate layer (referred to as "embeddings") of any such neural network (with pre-determined parameters preferably trained on other data).

In one more exemplary speech analysers, the acoustic feature metrics may comprise or consist of a 40-band log-Mel scale spectrum, derived from overlapping audio signal frames of 25 milliseconds length, which are sampled, e.g. at a constant rate every 10 milliseconds. The implementation of log-Mel scale spectrum is well known in prior art. In this case NP=40 x <no. of frames of the speech signal input> primary feature metrics are given as inputs to the neural network of the speech analyser.

The speech analyser comprises a secondary feature extractor for provision of secondary feature metrics. The secondary metrics may be of or associated with the speech data. The secondary feature extractor is configured to determine or extract one or more secondary feature metrics also denoted SFM_1, SFM_2, ..., SFM_NS, where NS is the number or secondary feature metrics of or associated with the speech data. In other words, the secondary feature metrics may be collectively denoted SFM =(SFM_1, SFM_2, ..., SFM_NS). In one or more exemplary speech analysers, the number NS of secondary feature metrics may be in the range from one to 30 such as in the range from 5 to 20.

In one or more exemplary speech analysers, the number NS of secondary feature metrics may be equal to the number NP of primary feature metrics.

A secondary feature metric is indicative of a secondary feature of the speech signal. The secondary feature extractor may be a linguistic feature extractor configured for provision of linguistic features as secondary feature metrics. In other words, the secondary feature metrics may be linguistic feature metrics indicative of linguistic features of the speech signal.

In one or more exemplary speech analysers, e.g. where the primary feature extractor is a linguistic feature extractor, the secondary feature extractor may be an acoustic feature extractor configured for provision of acoustic features as secondary feature metrics.

Linguistic features of the speech signal may include one or more of keyword counts, esp. positive or negative emotion words, Bag-of-word features (Term frequency, Inverse Document Frequency - TF-IDF), neural network embeddings (intermediate layer outputs) such as from the word2vec (https://en.wikipedia.org/wiki/Word2vec) model or neural network embeddings extracted from a neural network trained on any natural language understanding task, such as masked language modelling, sentiment prediction, etc. Such neural networks may have for example a sequence of text words as input, each word encoded as e.g. 1-hot word vector, where the dimensionality of the vector is rather high and equivalent to the size of the vocabulary (number of different words supported). The output of the network may be a sentiment label (e.g. positive or negative, or degree of positivity) which describes the sentiment seen in the word sequence or the output may be another 1-hot encoded word vector, which represents the next word following the input word sequence, or a missing word within the input word sequence. As alternative to 1-hot encoded word vectors, the input text string may also be represented as 1-hot encoded character vectors, or n-gram vectors. In this case the dimensionality of these vectors matches the number of characters in the alphabet or the number of n-gram character combinations that exist in the language of the text processed. The embeddings are outputs from an intermediate layer of such a neural network, usually the last intermediate layer or the one before the last layer. The embeddings vector has a fixed dimensionality, whereas the input sequence to the neural network is a matrix of NxM elements, where M is the fixed size of the input vectors (vocabulary size, alphabet size) and N is the variable number of words in the word sequence. The embeddings typically have a dimensionality in the range of 100 to 10000. Dimensionality of about 1,000 may be preferred.

The speech analyser comprises a speech model module. The speech model module comprises and/or implements a neural network with model layers including an input layer, one or more intermediate layers including a first intermediate layer, and an output layer for provision of a speaker metric. The input layer has an input and an output, wherein the input is fed with input variables, such as the primary feature metrics PFM. The speech model comprises one or more intermediate layers also referred to hidden layers. The terms intermediate layer and hidden layer are used interchangeably herein. The one or more intermediate layers are denoted IL_1, IL_2, ..., IL_K, where K is the number of intermediate or hidden layers in the speech model. In one or more exemplary speech analysers, the number K of intermediate layers of the speech model is in the range from 5 to 20, such as from 8 to 15, e.g. 10. In one or more exemplary speech analysers, the number K of intermediate layers of the speech model is larger than 20. The number NIN_k of inputs to respective intermediate layers I_L_k for k= 1, 2, ..., K may be equal to the number NS of secondary feature metrics. In other words, the number Nout_k of outputs from respective intermediate layer processing of intermediate layers I_L_k for k= 1, 2, ..., K may be equal to the number NS of secondary feature metrics. The number Nin_k of inputs to respective intermediate layers I_L_k for k= 1, 2, ..., K may be equal. In other words, optionally Nin_1=Nin_2=Nin_3= ...=Nin_K.

The number NS of secondary feature metrics preferably may be a fixed number, regardless of the length of the input audio signal or number of words in the input speech signal, whereas the number of primary feature metric input frame vectors (each of size NP) is a variable number (NF_PFM) and depends on the length of each input audio signal. Thus, the total number of primary feature metric inputs is a variable size matrix of NP x NF_PFM. The number of secondary feature metric inputs is NS x 1.

An intermediate layer comprises intermediate layer processing, e.g. performed by intermediate layer processing module of the intermediate layer. Intermediate layer processing of an intermediate layer may comprise or may consist of convolutional layer processing, feed-forward layer processing, self-attention layer processing, or recurrent layer processing. For example, a convolution layer processing may be given according to the following equation:

$$Y_n^j = \sum_{c=0}^{C_i}\left(w_j^c * X_n^c\right) + b_j,$$

where X is the input of the intermediate layer, a matrix of dimensionality (Ci, Hi, Wi); Y is the output of the intermediate layer processing, a matrix of dimensionality (Co, Ho, Wo); w is the intermediate layer's weight matrix of dimensionality (Kh, Kw); b is the intermediate layer's bias vector of dimensionality (Co); * is the 2D cross-correlation operator, and j is computed for each of the Co output channels.

In one or more exemplary intermediate layers, where the input X_k to the k'th intermediate layer is a vector of dimensionality (Nin_k), a feed-forward linear layer may be used as intermediate layer processing. The output Y_k of the intermediate layer processing may be given as:

$$Y\_k = W \otimes X\_k + b$$

where W is the weight matrix of dimensionality (Nout_k, Nin_k), and b is the layer's bias vector of dimensionality (Nout_k).

The input layer optionally comprises input layer processing, e.g. performed by input layer processing module of the input layer. Input layer processing of the input layer may comprise or may consist of convolutional layer processing, feed-forward layer processing, self-attention layer processing, or recurrent layer processing. For example, a convolution layer processing may be given according to the following equation:

$$Y\_IN_n^j = \sum_{c=0}^{C_i}\left(w_j^c * X\_IN_n^c\right) + b_j,$$

Where X_IN is the input (primary feature metrics PFM) of the input layer, a matrix of dimensionality (Ci, Hi, Wi); Y_IN is the output of the input layer processing, a matrix of dimensionality (Co, Ho, Wo); w is the input layer's weight matrix of dimensionality (Kh, Kw); b is the input layer's bias vector of dimensionality (Co); * is the 2D cross-correlation operator, and j is computed for each of the Co output channels.

In one or more exemplary intermediate layers, where the input X_IN (PFM) to the input layer is a vector of dimensionality (NP), a feed-forward linear layer may be used as input layer processing. The output Y_IN of the input layer processing may be given as:

$$Y\_IN = W \otimes X\_IN + b$$

where W is the weight matrix of dimensionality (Nout_IN, NP), and b is the layer's bias vector of dimensionality (Nout_IN). In one or more exemplary input layers Nout_IN is equal to NP.

The speech model module is configured to condition one or more model layers of the speech model based on the secondary feature metrics. In other words, the speech model module comprises one or more condition modules for conditioning one or more model layers, respectively. For example, the first intermediate layer may comprise a first condition module for conditioning the first intermediate layer, e.g. with a first condition function, for provision of output from the first intermediate layer as input to a second intermediate layer for a multi-intermediate-layer model or to the output layer for a single-intermediate-layer model.

In one or more exemplary speech analysers/methods, the speech model module is configured to condition an intermediate layer, e.g. with a condition function, based on the secondary feature metrics for provision of output from the intermediate layer as input to the model layer after the intermediate layer in the neural network.

In one or more exemplary speech analysers/methods, the speech model module is configured to condition the first intermediate layer, e.g. with first condition module, based on the secondary feature metrics for provision of output of the first intermediate layer as input to second intermediate layer or as input of output layer, i.e. to the model layer after the first intermediate layer in the neural network.

In one or more exemplary speech analysers/methods, the speech model includes a plurality of intermediate layers, e.g. including the first intermediate layer and a second intermediate layer, and wherein the speech model module is configured to condition at least two of the plurality of intermediate layers, e.g. with respective condition functions, based on the secondary feature metrics.

In one or more exemplary speech analysers/methods, the speech model module is configured to condition the second intermediate layer, e.g. with second condition function, based on the secondary feature metrics for provision of output of the second intermediate layer as input, e.g. input to third intermediate layer or input of output layer, to the model layer after the second intermediate layer in the neural network.

In one or more exemplary speech analysers/methods, the speech model includes at least three intermediate layers. The speech model module is optionally configured to condition each of the intermediate layers based on the secondary feature metrics.

In one or more exemplary speech analysers/methods, the intermediate layers of the speech model have output of the same dimension. In one or more exemplary speech analysers/methods, to condition an intermediate layer comprises to adjust, such as reduce or increase, the dimension of the secondary features metrics by a linear coordinate transformation (matrix multiplication) for matching the secondary feature metrics to the outputs of the intermediate layers In one or more exemplary speech analysers/methods, the speech model module is configured to condition, e.g. for one or more, such as a subset or all of k=1, 2, ..., K, the k'th intermediate layer, e.g. with k'th condition function CF_k, based on the secondary feature metrics for provision of output of the k'th intermediate layer as input, e.g. input to k+1'th intermediate layer or input of output layer, to the model layer after the k'th intermediate layer in the neural network. In other words, one or more intermediate layers such as each intermediate layer of the neural network may comprise a condition module configured to condition the respective intermediate layer based on the secondary feature metrics for provision of output from the respective intermediate layer as input to the model layer after the respective intermediate layer in the neural network.

In one or more exemplary speech analysers/methods, the speech model module is configured to condition the input layer, e.g. with input condition function CF_IN, based on the secondary feature metrics. In other words, the speech model module/input layer may comprise an input condition module configured to condition the input layer based on the secondary feature metrics for provision of output from the input layer as input to the first intermediate layer.

In one or more exemplary speech analysers/methods, to condition the input layer comprises to fuse the secondary feature metrics with the primary feature metrics for provision of input to the input layer processing. In one or more exemplary speech analysers, to condition the input layer may comprise to fuse the secondary feature metrics SFM with the primary feature metrics PFM and feed fused primary feature metrics also denoted PFM' as input to the input layer processing. In other words, the speech model module/input layer may comprise an input fuse module configured to fuse the secondary feature metrics with the primary feature metrics for provision of input to the input layer processing of the input layer processing.

To condition or fuse the secondary feature metrics with the primary feature metrics may comprise to apply an input fuse function also denoted FF_IN to primary feature metrics, e.g. based on the secondary feature metrics, or otherwise combine respective primary feature metrics with secondary feature metrics. The input fuse function FF_IN may comprise fuse functions f_in_np for respective primary feature metrics PFM_np optionally given as

$$x'\_in\_np = f\_in\_np(PFM\_np, SFM),$$

where np is an index 1, 2, ..., NP, PFM_np is the np'th primary feature metric, SFM is secondary features metrics, and x'_in_np is input variable to the input layer processing.

The fuse functions f_in_np may be given as f in_np(PFM np, SFM) = PFM_np + SFM_np for np = 1, 2, ..., NP. In other words, the input fuse function may perform element to element addition of primary feature metrics and secondary feature metrics.

In one or more exemplary speech analysers/methods, a fuse function f_in_1 for a primary first feature metric PFM_1 may be given as:

$$x'\_in\_1 = f\_in\_1(PFM\_1, SFM) = PFM\_1 + SFM\_1$$

where PFM_1 is a primary first feature metric of the primary feature metrics from the primary feature extractor and SFM_1 is a secondary first feature metric of the secondary feature metrics from the secondary feature metric.

In one or more exemplary speech analysers, an input fuse function f_in_2 for a primary second feature metric PFM_2 may be given as:

$$x'\_in\_2 = f\_in\_2(PFM\_2, SFM) = PFM\_2 + SFM\_2$$

where PFM_2 is a primary second feature metric of the primary feature metrics from the primary feature extractor and SFM_2 is a secondary second feature metric of the secondary feature metrics from the secondary feature metric.

In one or more exemplary speech analysers/methods, to condition an intermediate layer based on the secondary feature metrics comprises to condition or fuse the secondary feature metrics with an output of intermediate layer processing of the intermediate layer, e.g. for provision of output from the intermediate layer as input to the model layer after the intermediate layer in the neural network, such as the next intermediate layer or the output layer.

In one or more exemplary speech analysers/methods, to condition an intermediate layer based on the secondary feature metrics comprises to condition or fuse the secondary feature metrics with an input of the intermediate layer (output of previous model layer of the model) for provision of output from the intermediate layer as input to the model layer after the intermediate layer in the neural network, such as the next intermediate layer or the output layer.

In one or more exemplary speech analysers/methods, to condition an intermediate layer based on the secondary feature metrics comprises to map the secondary feature metrics to the dimension Nout_k of the outputs of the intermediate layers I_L_k, where all intermediate layers I_L_k, k=1,2,...,K have the same number of outputs. The dimensionality mapping is preferably a dimensionality reduction by a linear mapping function (e.g. multiplying a vector of NS secondary feature metrics with a mapping matrix MR of dimensionality N_T x NS to obtain a vector of dimensionality N_T, where N_T < NS) mapping the secondary feature metrics SFM to the appropriate dimensions Nout_k of the intermediate layer outputs/intermediate processing layer outputs. The matrix MR also denoted m in the euqations below can be derived e.g. by performing a Principal Component Analysis (PCA) on a training data set of large number (preferably > 1,000) of SFM vectors and then selecting only the N_T first principal components as rows of the matrix MR. Exemplary values are N_T = 256 and NS = 1,000.

In one or more exemplary speech analysers/methods, to condition an intermediate layer based on the secondary feature metrics, such as to fuse the secondary feature metrics with an output of intermediate layer processing of the intermediate layer, comprises to apply a condition function to an output of intermediate layer processing of the intermediate layer, e.g. based on the secondary feature metrics, or otherwise combine respective outputs of intermediate layer processing of the intermediate layer with secondary feature metrics.

In one or more exemplary speech analysers/methods, to condition or fuse the secondary feature metrics with an output of intermediate layer processing of the intermediate layer in the model comprises to combine, such as add, multiply, linearly or non-linearly combine, a secondary first feature metric of the secondary feature metrics with a first output of intermediate layer processing of the intermediate layer for provision of a first input to the model layer after the intermediate layer. For example, to combine may comprise or define one or more of additions, multiplications, linear or nonlinear combinations or other mathematical operations to combine a secondary feature metric and an output of the layer processing, e.g. for provision of an output of the layer based on the secondary feature metric and output of the layer processing.

In one or more exemplary speech analysers/methods, to fuse the secondary feature metrics with an output of intermediate layer processing of the intermediate layer in the model comprises to combine, such as add, multiply, linearly or non-linearly combine, a secondary second feature metric of the secondary feature metrics with a second output of intermediate layer processing of the intermediate layer for provision of a second input to the model layer after the intermediate layer.

A condition function CF_k and/or CF_IN may comprise or define one or more of additions, multiplications, linear combinations or other mathematical operations to combine secondary feature metrics and output of the layer processing, e.g. for provision of an output of the layer based on the secondary feature metrics and output of the layer processing. In one or more exemplary models, a condition function may comprise or define element-to-element additions of two vector inputs for provision of an output vector.

In one or more exemplary speech analysers/methods, the conditioning of a layer, such as input layer and/or intermediate layer(s), the conditioning is integrated in the layer processing, e.g. as part of convolutional layer processing.

In one or more exemplary speech analysers/methods, the conditioning of a layer, such as input layer and/or intermediate layer(s), the conditioning comprises attention conditioning, e.g. as part of convolutional layer processing.

For example, to condition the first intermediate layer may comprise to fuse the secondary feature metrics with the output of intermediate layer processing of the first intermediate layer by applying a first condition function CF_1 based on the secondary feature metrics to the output of intermediate layer processing of the first intermediate layer.

In one or more exemplary speech analysers/methods, to condition a k'th intermediate layer, may comprise to apply a k'th condition function CF_k based on the secondary feature metrics SFM to output of intermediate layer processing of the k'th intermediate layer for provision of input to the k+1'th intermediate layer, e.g. for one or more, such as subset or all of, k=1, 2, ..., K.

In one or more exemplary condition functions CF_k, the secondary feature metrics SFM are mapped to the appropriate dimension for each intermediate layer k through a linear projection function m. The linear projection function m may be unique for each intermediate layer k. In other words, the linear projection function m for the first intermediate layer I_L_1 may be different from the linear projection function m for the second intermediate layer I_L_2 and/or for the third intermediate layer I_L_3.

In one or more exemplary condition functions CF_IN, the secondary feature metrics SFM are mapped to the appropriate dimension for the input layer through a linear projection function m_in. The linear projection function m_in may be unique for the input layer. In other words, the linear projection function m_in for the input layer may be different from the linear projection functions m for the intermediate layers.

In one or more exemplary speech analysers/methods, a condition function CF_k for conditioning of an intermediate layer I_L_k may be given as:

$$Y' = CF(Y, SFM) = Y + m(SFM),$$

where Y (Y_k) is the output of the intermediate layer processing of the intermediate layer, Y' (Y'_k) the input to the next intermediate layer, and m the linear mapping function mapping the secondary feature metrics SFM to the appropriate dimension of Y and Y'.

In one or more exemplary speech analysers, a condition function CF_IN for conditioning the input layer may be given as:

$$Y'\_IN = CF\_IN(Y\_IN, SFM) = Y\_IN + m\_in(SFM)$$

were Y is the output of the input layer processing of the input layer; Y'_IN is the output of the input layer being input to the first intermediate layer; and m_in is a linear mapping function mapping the secondary feature metrics SFM to the appropriate dimension.

In one or more exemplary speech analysers/methods, the input layer and/or intermediate layers are feed-forward linear layers. In other words, the input layer processing may be a feed-forward linear processing and/or intermediate layer processing may be a feed-forward linear processing. Thus X_IN and/or input to intermediate layers are a vector of dimensionality (NP). In this case, the output of m(SFM) is a vector of dimensionality (Nout_k), and the output Y'_k of the k'th intermediate layer is optionally computed as follows:

$$Y'\_k = W \otimes Y\_k + b + m(SFM),$$

where W is the weight matrix of dimensionality (Nout_k, NP), and b is the intermediate layer's bias vector of dimensionality (Nout_k).

The output Y'_IN of the input layer is optionally computed as follows:

$$Y'\_IN = W \otimes Y\_IN + b + m(SFM),$$

where W is the weight matrix of dimensionality (Nout_IN, NP), and b is the input layer's bias vector of dimensionality (Nout_IN).

In one or more exemplary speech analysers/methods, the input layer and/or intermediate layers are convolutional layers. In other words, the input layer processing may be a convolutional processing and/or intermediate layer processing may be a convolutional processing. Thus, X_IN and/or X_k is a matrix of dimensionality (Cin, Hin, Win). In this case, the output of m(SFM) is a vector of dimensionality (Co). The output of the conditioned k'th convolutional layer may be given as:

$$Y'^{j}_{n} = \sum_{c=0}^{C_i} \left( w_j^c * X_n^c \right) + b_j + m(SFM)_j,$$

where X is the input of the intermediate layer, a matrix of dimensionality (Ci, Hi, Wi); Y is the output of the intermediate layer processing, a matrix of dimensionality (Co, Ho, Wo); w is the intermediate layer's weight matrix of dimensionality (Kh, Kw); b is the intermediate layer's bias vector of dimensionality (Co); * is the 2D cross-correlation operator, and j is computed for each of the Co output channels.

In one or more exemplary speech analysers/methods, a condition function for the output of an intermediate layer processing may be implemented as an attention mechanism. For example, if the intermediate layer is a convolution layer with input X of dimensionality (Cin, Hin, Win), then the output will be computed as follows:

$$Z_n^j = \sum_{c=0}^{C_i} \left( w_j^c * X_n^c \right) + b_j$$

$$a = m(SFM) \otimes Z$$

$$v = logsoftmax(a) = ln\left( \frac{exp(a_{ij})}{\sum exp(a_{ij})} \right)$$

$$Y' = v \odot X,$$

where X is the input of the intermediate layer, a matrix of dimensionality (Ci, Hi, Wi); Z is the intermediate output of the intermediate layer processing, a matrix of dimensionality (Co, Ho, Wo); Y' is the output of the intermediate layer processing, a matrix of dimensionality (Co, Ho, Wo); w is the intermediate layer's weight matrix of dimensionality (Kh, Kw); b is the intermediate layer's bias vector of dimensionality (Co); * is the 2D cross-correlation operator; j is computed for each of the Co output channels; $\otimes$ is the matrix multiplication operator; $\odot$ is the dot product operator.

Thus, in one or more exemplary speech analysers, the conditioning of input layer/intermediate layer may be integrated or embedded in the layer processing, such as the input layer processing and/or one or more intermediate layer processings.

In one or more exemplary speech analysers/methods, the speech analyser comprises a speech recognizer for provision of input to the secondary feature extractor based on the speech data. The speech recogniser may be a speech-to-text transcriber. In other words, the input to the secondary feature extractor may comprise a text representation/text transcript/tect data of or at least associated with the speech data, e.g. comprising the actual words and sentences of the speech data. Thus, the second feature metrics may be linguistic feature metrics derived from/based on a text transcript of the speech signal or at least text data based on or associated with the speech data. In one more exemplary speech analysers, the input module is configured to obtain a text representation/text data of the speech data, e.g. from a database or memory, and feed the text representation/tect data to the secondary feature extractor.

In one or more exemplary speech analysers/methods, the speaker metric is a sentiment metric. In other words, the speaker metric may be a speaker state, such as sentiment state of a speaker.

A sentiment metric is indicative of a sentiment state of a speaker. A sentiment metric may comprise one or more of a sentiment type identifier, sentiment level(s), and a confidence score. A sentiment metric may comprise a plurality of sentiment type identifiers, sentiment levels, and confidence scores. A sentiment metric SM may include a primary sentiment metric, also denoted SM_1, indicative of a primary sentiment state. In other words, SM_1 may be indicative of a primary emotion in the speech signal. SM_1 may be indicative of a dominating sentiment state and/or a first sentiment state in time. The primary sentiment state may be one of disappointed, bored, afraid, sad, negative, very negative, frustrated, annoyed, fearful, panicking, hesitant, dissatisfied, angry, surprised, worried, wondering, not understanding, thinking, neutral, positive, very positive, glad, friendly, confident, excited, pleased, satisfied, aroused, content, relaxed, energetic, enthusiastic, service-minded, helpful, interested, and happy. In one or more exemplary methods/speech analysers, the primary sentiment state of the first speaker may be selected from a primary set of sentiment states.

In one or more exemplary methods/speech analysers, the primary sentiment metric is indicative of sleepiness and/or intoxication, such as alcohol intoxication and/or medicine intoxication and/or drug intoxication.

A sentiment metric SM may include a plurality of sentiment metrics SM_i, i being an index from 1 to N being the number of sentiment metrics in the sentiment metric. For example, the sentiment metric may comprise a plurality of sentiment metrics, such as a primary sentiment metric and a secondary sentiment metrics, also denoted SM_2. The secondary sentiment metric may be indicative of a secondary sentiment state. In other words, SM_2 may be indicative of a secondary emotion in the speech signal. SM_2 may be indicative of a second-most dominating sentiment state and/or a second sentiment state in time. The secondary sentiment state may be one of disappointed, bored, afraid, sad, negative, very negative, frustrated, annoyed, fearful, panicking, hesitant, dissatisfied, angry, surprised, worried, wondering, not understanding, thinking, neutral, positive, very positive, glad, friendly, confident, excited, pleased, satisfied, aroused, content, relaxed, energetic, enthusiastic, service-minded, helpful, interested, and happy. In one or more exemplary methods/speech analysers, the secondary sentiment state of the first speaker may be selected from a secondary set of sentiment states.

In one or more exemplary methods/speech analysers, the secondary sentiment metric is indicative of sleepiness and/or intoxication, such as alcohol intoxication and/or medicine intoxication and/or drug intoxication.

A sentiment metric, SM_i may comprise a sentiment type identifier, also denoted ST_IDJ. In other words, determining a sentiment metric SM_i may comprise determining a sentiment type identifier ST_ID_i, e.g. a primary sentiment type identifier ST_ID_1 of the primary sentiment metric SM_1 and/or a secondary sentiment type identifier ST _ID_2 of the secondary sentiment metric SM_2. A sentiment type identifier is indicative of a sentiment state of a speaker/speech signal.

A sentiment type identifier may for example be a label, a number or value, such as an integer, corresponding to a specific sentiment (state), a sentiment type and/or a sentiment class. For example, ST_ID_i may respectively be selected from the same or different sets of sentiment type identifiers. For example, ST_ID_1 may be selected from a primary set of sentiment type identifiers and/or ST_ID_2 may be selected from a secondary set of sentiment type identifiers. The primary set of sentiment type identifiers may be different from or the same as the secondary set of sentiment type identifiers. The primary set of sentiment type identifiers and the secondary set of sentiment type identifiers may share one or more, such as a plurality of, sentiment type identifiers.

In one or more exemplary methods/speech analysers, the primary sentiment metric SM_1 comprises a primary sentiment type identifier ST_ID_1 selected from a primary set of sentiment type identifiers ST_ID_SET_1, where ST _ID_SET _1 comprises a plurality of sentiment type identifiers, e.g. including at least three, four, five or more sentiment type identifiers. In one or more exemplary methods/speech analysers, a sentiment type is defined by a position in a data structure, such as a vector. For example, a first element of a sentiment metric vector may be reserved/assigned to a first sentiment type and/or a second element of a sentiment metric vector may be reserved/assigned to a second sentiment type.

A sentiment metric SM_i, such as the primary sentiment metric SM_1 and/or the secondary sentiment metric SM_2, may comprise a sentiment level, also denoted SL_i.

The sentiment level SL_i is indicative of the level or degree of the sentiment indicated by the sentiment type identifier/position in sentiment metric vector. In other words, determining SM_i may comprise determining SL_i, e.g. determining SM_1 may comprise determining a primary sentiment level SL_1. A sentiment level SL_i may indicate a level of the i'th sentiment type. In other words, SL_i may indicate a degree of the i'th sentiment type. For example, when ST_ID_1 corresponds to the speaker state "positive", a primary sentiment level SL_1 may be indicative of or correspond to a degree of the sentiment "positive", e.g. at a scale, e.g. from 0 to 1 or from 1 to 10, or selected from "low", "medium", and "high". In other words, a sentiment level of a sentiment metric may be on a scale, e.g. from 0 to 1 or from 1 to 10.

A sentiment metric SM_i may comprise a confidence score, respectively denoted SCS_i. In other words, determining SM_i may comprise determining a confidence score SCS_i, e.g. determining primary sentiment metric SM_1 may comprise determining a primary confidence score SCS_1. A confidence score of a sentiment metric may be indicative of a score or a probability of the determined sentiment metric, e.g. sentiment type identifier and/or sentiment level, being correct, e.g. the sentiment state or sentiment type (as identified by the sentiment type identifier of the sentiment metric) being correct. For example, SCS_1 = 0.88 may be indicative of a probability of 88% that the determined ST_ID_1, e.g.

being "positive", is correct.

In one or more exemplary speech analysers/methods, the speaker metric is a trait metric.

A trait metric is indicative of a trait of a speaker. A trait metric may comprise one or more of a trait identifier, trait level(s), and a confidence score. A trait metric may comprise a plurality of trait type identifiers, sentiment levels, and confidence scores. A trait metric TM may include a primary trait metric, also denoted TM_1, indicative of a primary trait state. In other words, TM_1 may be indicative of a primary trait in the speech signal/speaker being the source of the speech signal. TM_1 may be indicative of a dominating sentiment state and/or a first sentiment state in time.

A trait metric TM may include a plurality of trait metrics TM_i, i being an index from 1 to M being the number of trait metrics in the trait metric. For example, the trait metric may comprise a plurality of trait metrics, such as a primary trait metric and a secondary trait metric, also denoted TM_2. The secondary trait metric may be indicative of a secondary trait state. In other words, TM_2 may be indicative of a secondary trait of the speaker/speech signal. TM_2 may be indicative of a second-most dominating trait state and/or a second trait state in time.

A trait metric may be indicative of a trait of the speaker/speech signal. The trait metrics TM_i may comprise one or more parameters indicative of the trait of the speech signal/speaker. The trait metric TM optionally includes a primary trait metric, also denoted TM_1, indicative of a primary trait of the speaker/speech signal and/or a secondary trait metric, also denoted TM_2, indicative of a secondary trait of the speaker/speech signal.

In other words, TM_1 may be indicative of a primary trait of the speaker/speech signal. TM_1 may be selected from a gender metric (e.g. woman/female, man/male, or no gender), a weight metric, a height metric, an age metric, a language metric, a language capability metric, a hearing capability metric, a dialect metric, a health metric (e.g. respiratory condition, speech deficiency, and/or speaking impairment), a personality metric (e.g. extrovert or introvert person), and an understanding capability metric (e.g. based on age metric, health metric, and/or gender metric). The understanding capability metric may for be relevant when an old person has difficulties hearing a conversation, or a foreigner who's not comfortable in the spoken language.

A trait metric TM_i may comprise a trait identifier, also denoted T_ID_i. A first trait identifier may be indicative of one of a gender metric, a weight metric, a height metric, an age metric, a language metric, a language capability metric, a hearing capability metric, and an understanding capability metric. In other words, determining TM_i may comprise determining T_ID_i, including a primary trait identifier T_ID_1 of a primary trait metric TM_1 and/or a secondary trait identifier T_ID_2 of a secondary trait metric TM_2.

A trait identifier may for example be a label, a number or a value, such as an integer, corresponding to a specific trait metric, trait type and/or an trait class. For example, T_ID_i may be chosen from a set of trait types, e.g. including one or more of gender, height, weight, height, age, language, language capability, hearing capability, and understanding capability. The trait identifier may be a label or a number that is mapped to and/or indicative of the type of trait metric. In one or more exemplary methods/speech analysers, a trait (trait identifier) is defined by a position in a data structure, such as a vector. For example, a first element of a trait metric vector may be reserved/assigned to a first trait type, such as gender, and/or a second element of a trait metric vector may be reserved/assigned to a second trait type, such as age.

In one or more exemplary methods, the primary trait metric TM_1 comprises a primary trait identifier T_ID_1 optionally selected from a primary set of trait identifiers T_ID_SET_1, where T_ID_SET_1 comprises a plurality of trait identifiers, e.g. including at least three, four, five or more trait type identifiers. In one or more exemplary methods, the primary trait metric TM_1 is a gender metric, i.e. primary metric identifier T_ID_1 is indicative of gender, e.g. T_ID_1 = "Gender" or T_ID_1 = 1 that can be mapped to gender via a table.

In one or more exemplary methods/speech analysers, the secondary trait metric TM_2 comprises a secondary trait identifier T_ID_2 optionally selected from a secondary set of trait identifiers T_ID_SET_2, where T_ID_SET_2 comprises a plurality of trait identifiers, e.g. including at least three, four, five or more trait identifiers. In one or more exemplary methods, the secondary trait metric TM_2 is an age metric, i.e. secondary metric identifier T_ID_2 is indicative of age, e.g. T_ID_2 = "Age" or T_ID_1_2 = 2 that can be mapped to age via a table.

A set of trait identifiers may comprise two or at least three or at least four different trait identifiers, such as five, six, seven, eight, nine, or more trait identifiers. For example, the primary trait metric TM_1 may comprise a primary trait identifier T_ID_1 indicative of or corresponding to the primary trait of the speaker/speech signal, e.g. one of gender, weight, height, age, language, language capability, hearing capability, and understanding capability. For example, a secondary trait identifier T_ID_2 may be indicative of or correspond to a secondary trait of the speaker/speech signal, e.g. one of gender, weight, height, age, language, language capability, hearing capability, and understanding capability. The secondary trait identifier is optionally different from the primary trait identifier.

A trait metric TM_i may comprise a trait level, also denoted TL_i. In other words, determining TM_i may comprise determining TL_i, e.g. determining TM_1 may comprise determining a primary trait level TL_1. The trait level TL_i may indicate a level, value, range, or label of the trait metric TM_i as indicated by the trait identifier T_ID_i. In other words, a trait level TL_i may indicate a level, value, range, or label of the trait metric TM_i. For example, when T_ID_1 corresponds to the primary trait of the speaker/speech signal being "gender", a primary trait level TL_1 may be indicative of or correspond to "male", "female" or optionally "unisex". For example, when secondary trait identifier T_ID_2 corresponds to the secondary trait metric of the speaker/speech signal being "height", a secondary trait level TL_2 may be indicative of or correspond to "short", "medium" or "tall". For example, when secondary trait identifier T _ID_2 corresponds to the secondary trait of the speaker/speech signal being "height", a secondary trait level TL_2 may be indicative of or correspond to "less than 160 cm", "between 160 cm and 185 cm" or "taller than 185 cm".

For example, when a trait identifier, such as a tertiary trait identifier T _ID_3, corresponds to a trait metric, such as tertiary trait metric TM_3, of the speaker being "age", a tertiary trait level TL_3 may be indicative of or correspond to an age range such as "younger than 20 years", "20-40 years", "40-60 years", or "older than 60 years" or an age label, such as "young", "mid-aged" or "old".

A trait metric TM_i may comprise a confidence score, also denoted TCS_i. In other words, determining a trait metric TM_i may comprise determining a trait confidence score TCS_i, e.g. determining a primary trait metric TM_1 may comprise determining a primary trait confidence score TCS_1. A trait confidence score TCS_i of a trait metric TM_i may be indicative a score or a probability of the determined trait metric TM_i, such as trait level TL_i, being correct, e.g. the trait metric or trait level being correct. For example, TCS_1 = 0.95 may be indicative of a probability of 95% that a determined TL_1 being "male" is correct.

Also disclosed is a method of determining a speaker metric. The method may be performed by a speech analyser and/or an electronic device as disclosed herein. The method comprises obtaining speech data; determining primary feature metrics based on the speech data; determining secondary feature metrics associated with the speech data; and determining a speaker state based on the primary feature metrics and the secondary feature metrics. In the method, determining a speaker metric comprises applying a speech model, the speech model comprising a neural network with a number of model layers including an input layer, one or more intermediate layers including a first intermediate layer, and an output layer. Applying the speech model optionally comprises conditioning an intermediate layer based on the secondary feature metrics for provision of input to the model layer after the intermediate layer in the neural network. The method may be a method of determining a speaker metric during a call or conversation between two speakers. In other words, the method may be a method of determining a speaker metric in real-time or at least with a delay less than 5 seconds during a call or conversation.

It is noted that features described in relation to the speech analyser also applies to methods and vice versa. For example, a description of an element, module, or extractor configured to perform a function also applies to a method comprising performing the function.

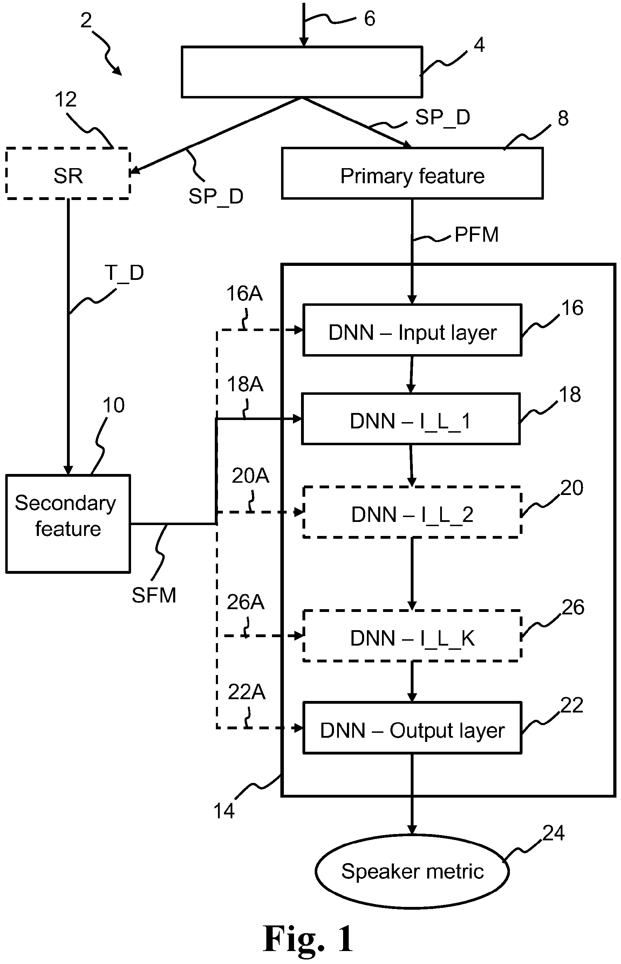

Fig. 1 shows a block diagram of an exemplary speech analyser according to the present disclosure. The speech analyser 2 comprises an input module 4 for provision of speech data SP_D based on a speech signal 6. The speech analyser 2 comprises a primary feature extractor 8 for provision of primary feature metrics PFM of the speech data. For example, the primary feature extractor 8 may be an acoustic feature extractor configured for provision of at least NP primary feature metrics PFM_np, where np = 1, 2, ..., NP, the primary feature metrics being acoustic feature metrics. In other words, the primary feature extractor 8 is connected to the input module 4 and configured to determine or derive primary feature metrics PFM based on the speech data SP_D. The number NP of primary feature metrics may be in the range from 10 to 50.

The speech analyser 2 comprises secondary feature extractor 10 for provision of secondary feature metrics SFM associated with the speech data. For example, the secondary feature extractor 10 may be a linguistic feature extractor configured for provision of at least NS secondary feature metrics SFM_ns, where ns = 1, 2, ..., NS, the secondary feature metrics being linguistic feature metrics. In other words, the secondary feature extractor 10 is configured to determine or derive secondary feature metrics SFM associated with the speech data SP_D. The number NS of secondary feature metrics may be in the range from 100 to 1,000. In one or more example speech analysers/methods, the secondary feature metrics are mapped to the dimensions of the primary feature metrics and/or intermediate layer output by a linear mapping function mapping the secondary feature metrics SFM to the appropriate dimensions of PFM.

The speech analyser 2 optionally comprises a speech recognizer 12 for provision of input to the secondary feature extractor 10 based on the speech data SP_D. The speech recogniser 12 may be a speech-to-text transcriber. In other words, the input to the secondary feature extractor 10 may comprise a text representation/text transcript/text data T_D of the speech data SP_D. In one or more speech analysers, the input module is configured to obtain the text data T_D e.g. from an external speech recognizer or memory. Thus, the second feature metrics SFM may be linguistic feature metrics derived from/based on a text transcript of the speech signal or at least text data associated with the speech data.

The speech analyser 2 comprises a speech model module 14 comprising or implementing a neural network with model layers including an input layer 16, one or more intermediate layers, such as a plurality of intermediate layers, including a first intermediate layer 18, optionally a second intermediate layer 20, and an output layer 22 for provision of a speaker metric 24. The neural network may comprise K intermediate layers including K'th intermediate layer 26.

The speech model module 14 is connected to the primary feature extractor 8 for receiving the primary feature metrics PFM as a primary input. The speech model module 14 is connected to the secondary feature extractor 10 for receiving the secondary feature metrics SFM as a secondary input. Speech model module 14 is configured to output a speaker metric 24 based on the neural network. To output the speaker metric 24 may comprise to transmit to another device and/or module and/or to store the speaker metric 24 in a memory. The speaker metric may be a sentiment metric or a trait metric.

The speech model module 14 is configured to condition one or more model layers, such as one or more intermediate layers, of the neural network, such as one or more of first intermediate layer 18, the second intermediate layer 20, and K'th intermediate layer 26, based on the secondary feature metrics SFM for provision of output from the intermediate layer as input to the model layer after the intermediate layer in the neural network. In other words, the secondary feature metrics SFM are fed to one or more model layers, such as input layer 16 via connection 16A, a plurality of intermediate layers via connections 18A, 20A, 26A, and/or output layer 22 via connection 22A for conditioning respective model layers 16, 18, 20, 22, 26, respectively based on the secondary feature metrics SFM.

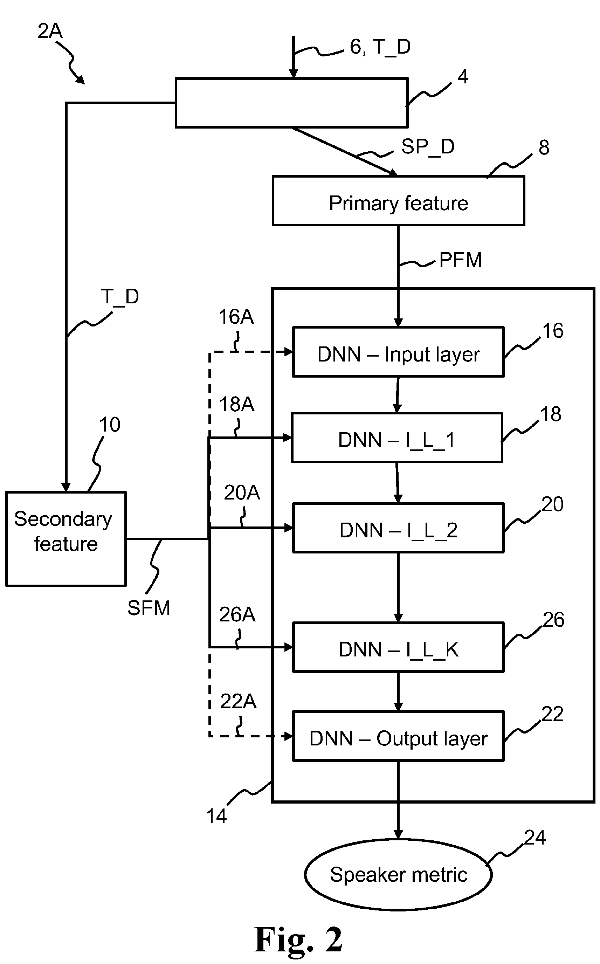

Fig. 2 shows a block diagram of an exemplary speech analyser according to the present disclosure. The speech analyser 2A is similar to the speech analyser 2 described in Fig. 1, except that the input module 4 is configured to receive text data T_D associated with or indicative of the speech signal 6/speech data SP_D from an external device/memory.

Further, the speech model module 14 of speech anlyser 2A is configured to condition all intermediate layers of the neural network based on the secondary feature metrics.

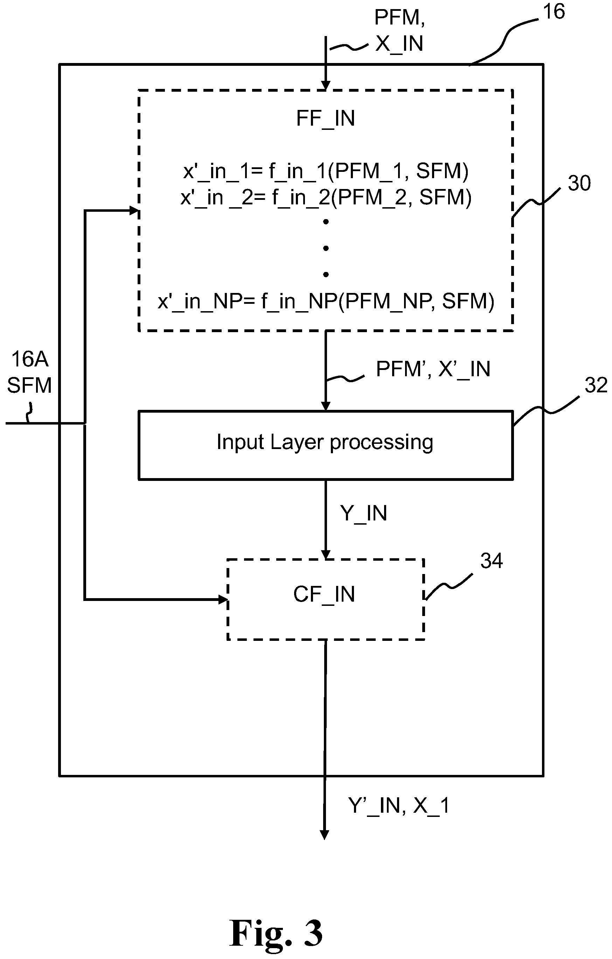

Fig. 3 illustrates an example conditioning of the input layer with the secondary feature metrics SFM. The input layer 16 is optionally conditioned with an input fuse function FF_IN represented by input fuse module 30. In other words, to condition the input layer 16 optionally comprises to fuse the secondary feature metrics SFM with the primary feature metrics PFM (input X_IN to input layer 16) for provision of input PFM' to the input layer processing represented by input layer processing module 32. The input layer 16 is optionally conditioned with an input condition function CF_IN represented by input condition module 34. In other words, to condition the input layer 16 optionally comprises to fuse the secondary feature metrics SFM with output Y_IN of input layer processing module 34 for provision of output Y'_IN from the input layer 16 as input to the first intermediate layer 18, i.e. the model layer after the input layer in the neural network

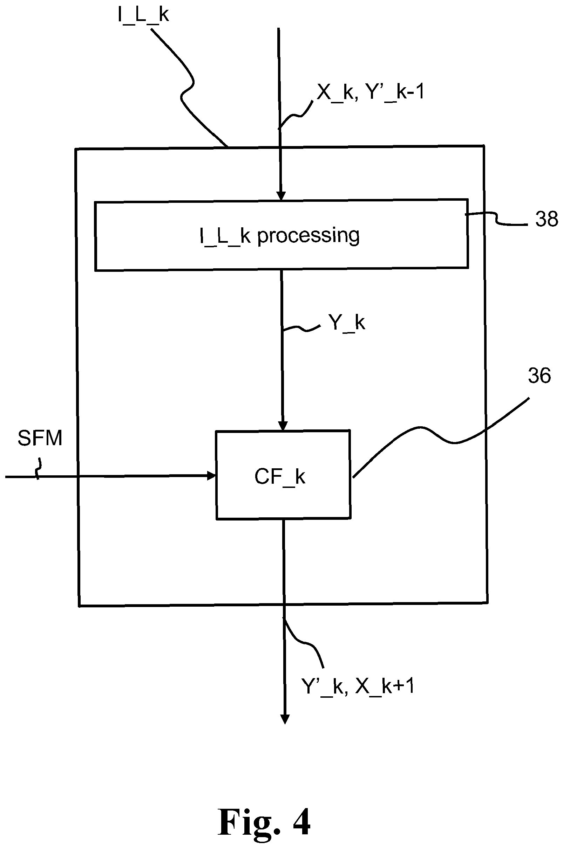

Fig. 4 illustrates an example conditioning of a k'th intermediate layer, e.g. for one or more, such as subset or all of k=1, 2, ..., K, such as the first intermediate layer (k=1), the second intermediate layer (k=2) and/or the K'th intermediate layer (k=K), with the secondary feature metrics SFM. The k'th intermediate layer is conditioned with a k'th condition function CF_k represented by k'th condition module 36 by applying a k'th condition function CF_k to output Y_k of the k'th intermediate processing layer represented by k'th intermediate layer processing module 38 for provision of output Y'_k from the k'th intermediate layer. The output Y'_k of k'th intermediate layer is fed as input X_k+1 to the next intermediate layer I_L_k+1. In other words, to condition the k'th intermediate layer I_L_k comprises to fuse the secondary feature metrics SFM with the output Y_k of to the k'th intermediate layer processing for provision of output Y'_k from the k'th intermediate layer as input to the model layer after the k'th intermediate layer in the neural network.

In one of more exemplary speech analysers/intermediate layers, such as for k=1 and/or k=2, f_1 of condition function CF_k is given as f_1 = x_1 + SFM_1. In other words, to fuse the secondary feature metrics with an output of intermediate layer processing of the intermediate layer optionally comprises to combine a secondary first feature metric SFM_1 of the secondary feature metrics with a first output y_1 of the intermediate layer processing for provision of a first input to the model layer after the intermediate layer.

In one of more exemplary speech analysers/intermediate layers, such as for k=1 and/or k=2, f_2 of fuse function FF_k is given as f_2 = x_2 + SFM_2. In other words, to fuse the secondary feature metrics with an output of the previous layer in the model optionally comprises to combine a secondary second feature metric SFM_2 of the secondary feature metrics with a second output of the the previous layer (also second input x_2 to k'th intermediate layer) for provision of a second input to the k'th intermediate layer processing.

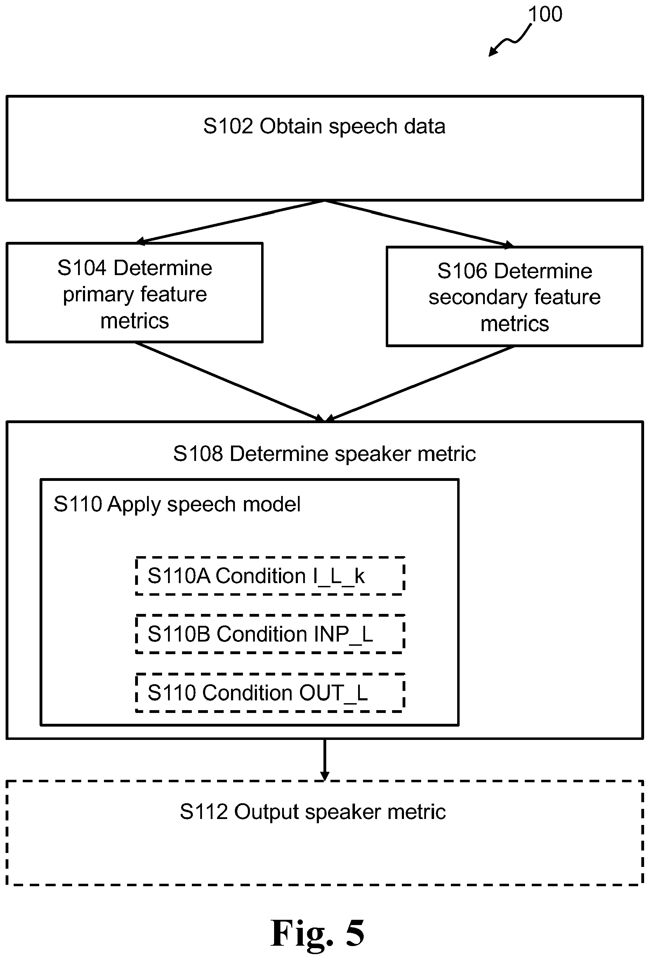

Fig. 5 is a flow diagram of an exemplary method according to the present disclosure. The method 100 of determining a speaker metric comprises obtaining S102 speech data; determining S104 primary feature metrics based on the speech data; determining S106 secondary feature metrics associated with the speech data; and determining S108 a speaker state based on the primary feature metrics and the secondary feature metrics. Determining S108 a speaker metric comprises applying S110 a speech model, the speech model comprising a neural network with a number of model layers including an input layer, one or more intermediate layers including a first intermediate layer, and an output layer, Applying S110 a speech model optionally comprises conditioning S110A an intermediate layer based on the secondary feature metrics for provision of input to the model layer after the intermediate layer in the neural network. Applying S110 a speech model optionally comprises conditioning S110B the input layer based on the secondary feature metrics, e.g. for provision of input to the first intermediate layer in the neural network.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Memory may be one or more of a buffer, a flash memory, a hard drive, a removable media, a volatile memory, a non-volatile memory, a random access memory (RAM), or other suitable device. In a typical arrangement, memory may include a non-volatile memory for long term data storage and a volatile memory that functions as system memory for the processor. Memory may exchange data with processor over a data bus. Memory may be considered a non-transitory computer readable medium.

Memory may be configured to store information (such as information indicative of the one or more audio signals, the one or more sentiment metrics, the one or more trait metrics, the speaker representations, the sentiment metric data, and/or the trait metric data) in a part of the memory.

Furthermore, the labelling of a first element does not imply the presence of a second element and vice versa.

It may be appreciated that Figs. 1-5 comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types.

Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense.

LIST OF REFERENCES

2 speech analyser
4 input module
6 speech signal
8 primary feature extractor
10 secondary feature extractor
12 speech recognizer
14 speech model module
16 input layer
16A connection
18 first intermediate layer
18A connection
20 second intermediate layer
20A connection
22 output intermediate layer

22A connection
24 speaker metric
26 K'th intermediate layer
26A connection
30 input fuse module
32 input layer processing module
34 input condition module
36 k'th condition module
38 k'th intermediate layer processing module
100 method of determining a speaker metric
S102 obtaining speech data
S104 determining primary feature metrics based on the speech data
S106 determining secondary feature metrics associated with the speech data
S108 determining a speaker state based on the primary feature metrics and the secondary feature metrics
S110 applying a speech model
S110A conditioning an intermediate layer based on the secondary feature metrics
S110B conditioning the input layer based on the secondary feature metrics
S110C conditioning the output layer based on the secondary feature metrics
S112 outputting the speaker metric
CF_IN condition function of the input layer
CF_k condition function of k'th intermediate layer
FF_IN fuse function of the input layer
PFM primary feature metrics
PFM_1 primary first feature metric
PFM_2 primary second feature metric
SFM secondary feature metrics
SFM_1 secondary first feature metric
SFM_2 secondary second feature metric
SP_D speech data
T_D text data

## Claims

1. A speech analyser comprising:

   an input module for provision of speech data based on a speech signal;
   a primary feature extractor for provision of primary feature metrics of the speech data;
   a secondary feature extractor for provision of secondary feature metrics associated with the speech data; and
   a speech model module comprising a neural network with model layers including an input layer, one or more intermediate layers including a first intermediate layer, and an output layer for provision of a speaker metric,

   wherein the speech model module is configured to condition an intermediate layer based on the secondary feature metrics for provision of output from the intermediate layer as input to the model layer after the intermediate layer in the neural network.

2. Speech analyser according to claim 1, wherein the speech model includes a plurality of intermediate layers, and wherein the speech model module is configured to condition at least two of the plurality of intermediate layers based on the secondary feature metrics.

3. Speech analyser according to claim 2, wherein the speech model includes at least three intermediate layers, and wherein the speech model module is configured to condition each of the intermediate layers based on the secondary feature metrics.

4. Speech analyser according to claim 3, wherein the intermediate layers of the speech model have output of the same dimension and wherein to condition an intermediate layer comprises to adjust the dimension of the secondary features metrics by a linear coordinate transformation for matching the secondary feature metrics to the outputs of the intermediate layers.

**5.** Speech analyser according to any of claims 1-4, wherein the speech model module is configured to condition the input layer based on the secondary feature metrics for provision of output from the input layer.

**6.** Speech analyser according to claim 5, wherein to condition the input layer comprises to fuse the secondary feature metrics with the primary feature metrics for provision of input to the input layer processing.

**7.** Speech analyser according to any of claims 1-6, wherein to condition an intermediate layer based on the secondary feature metrics comprises to fuse the secondary feature metrics with an output of intermediate layer processing of the intermediate layer for provision of output from the intermediate layer as input to the model layer after the intermediate layer in the neural network.

**8.** Speech analyser according to claim 7, wherein to fuse the secondary feature metrics with an output of intermediate layer processing of the intermediate layer comprises to combine a secondary first feature metric of the secondary feature metrics with a first output of intermediate layer processing of the intermediate layer for provision of a first input to the model layer after the intermediate layer, and to combine a secondary second feature metric of the secondary feature metrics with a second output of intermediate layer processing of the intermediate layer for provision of a second input to the model layer after the intermediate layer.

**9.** Speech analyser according to any of claims 1-8, wherein the primary feature extractor is an acoustic feature extractor configured for provision of acoustic features as primary feature metrics.

**10.** Speech analyser according to any of claims 1-9, wherein the secondary feature extractor is a linguistic feature extractor configured for provision of linguistic features as secondary feature metrics.

**11.** Speech analyser according to any of claims 1-10, wherein the speech analyser comprises a speech recognizer for provision of input to the secondary feature extractor based on the speech data.

**12.** Speech analyser according to any of claims 1-11, wherein the speaker metric is a sentiment metric or a trait metric.

**13.** A method of determining a speaker metric, the method comprising:

obtaining speech data;
determining primary feature metrics based on the speech data;
determining secondary feature metrics associated with the speech data; and
determining a speaker state based on the primary feature metrics and the secondary feature metrics,

wherein determining a speaker metric comprises applying a speech model, the speech model comprising a neural network with a number of model layers including an input layer, one or more intermediate layers including a first intermediate layer, and an output layer, and wherein applying the speech model comprises conditioning an intermediate layer based on the secondary feature metrics for provision of input to the model layer after the intermediate layer in the neural network.

**Patentansprüche**

**1.** Sprachanalysator, umfassend:

ein Eingabemodul zur Bereitstellung von Sprachdaten basierend auf einem Sprachsignal;
einen primären Merkmalsextraktor zur Bereitstellung von primären Merkmalsmetriken der Sprachdaten;
einen sekundären Merkmalsextrahierer zur Bereitstellung von sekundären Merkmalsmetriken, die den Sprachdaten zugeordnet sind; und
ein Sprachmodellmodul, umfassend ein neuronales Netz mit Modellschichten, die eine Eingangsschicht, eine oder mehrere Zwischenschichten, die eine erste Zwischenschicht beinhalten, und eine Ausgangsschicht zur Bereitstellung einer Sprechermetrik beinhalten,
wobei das Sprachmodellmodul dazu konfiguriert ist, eine Zwischenschicht basierend auf den sekundären Merkmalsmetriken zur Bereitstellung eines Ausgangs aus der Zwischenschicht als Eingang in die Modellschicht nach der Zwischenschicht in dem neuronalen Netz zu konditionieren.

2. Sprachanalysator nach Anspruch 1, wobei das Sprachmodell eine Vielzahl von Zwischenschichten beinhaltet und wobei das Sprachmodellmodul dazu konfiguriert ist, mindestens zwei der Vielzahl von Zwischenschichten basierend auf den sekundären Merkmalsmetriken zu konditionieren.

3. Sprachanalysator nach Anspruch 2, wobei das Sprachmodell mindestens drei Zwischenschichten beinhaltet und wobei das Sprachmodellmodul dazu konfiguriert ist, jede der Zwischenschichten basierend auf den sekundären Merkmalsmetriken zu konditionieren.

4. Sprachanalysator nach Anspruch 3, wobei die Zwischenschichten des Sprachmodells einen Ausgang der gleichen Dimension aufweisen und wobei das Konditionieren einer Zwischenschicht Einstellen der Dimension der sekundären Merkmalsmetriken durch eine lineare Koordinatentransformation zum Anpassen der sekundären Merkmalsmetriken an die Ausgänge der Zwischenschichten umfasst.

5. Sprachanalysator nach einem der Ansprüche 1-4, wobei das Sprachmodellmodul dazu konfiguriert ist, die Eingangsschicht basierend auf den sekundären Merkmalsmetriken zur Bereitstellung eines Ausgangs aus der Eingangsschicht zu konditionieren.

6. Sprachanalysator nach Anspruch 5, wobei das Konditionieren der Eingangsschicht umfasst, die sekundären Merkmalsmetriken mit den primären Merkmalsmetriken zur Bereitstellung eines Eingangs in die Eingangsschichtverarbeitung zu fusionieren.

7. Sprachanalysator nach einem der Ansprüche 1-6, wobei das Konditionieren einer Zwischenschicht basierend auf den sekundären Merkmalsmetriken umfasst, die sekundären Merkmalsmetriken mit einem Ausgang der Zwischenschichtverarbeitung der Zwischenschicht zur Bereitstellung eines Ausgangs aus der Zwischenschicht als Eingang in die Modellschicht nach der Zwischenschicht in dem neuronalen Netz zu fusionieren.

8. Sprachanalysator nach Anspruch 7, wobei das Fusionieren der sekundären Merkmalsmetriken mit einem Ausgang der Zwischenschichtverarbeitung der Zwischenschicht umfasst, eine sekundäre erste Merkmalsmetrik der sekundären Merkmalsmetriken mit einem ersten Ausgang der Zwischenschichtverarbeitung der Zwischenschicht zur Bereitstellung eines ersten Eingangs in die Modellschicht nach der Zwischenschicht zu kombinieren und eine sekundäre zweite Merkmalsmetrik der sekundären Merkmalsmetriken mit einem zweiten Ausgang der Zwischenschichtverarbeitung der Zwischenschicht zur Bereitstellung eines zweiten Eingangs in die Modellschicht nach der Zwischenschicht zu kombinieren.

9. Sprachanalysator nach einem der Ansprüche 1-8, wobei der primäre Merkmalsextrahierer ein akustischer Merkmalsextrahierer ist, der zur Bereitstellung akustischer Merkmale als primäre Merkmalsmetriken konfiguriert ist.

10. Sprachanalysator nach einem der Ansprüche 1-9, wobei der sekundäre Merkmalsextrahierer ein Extrahierer für linguistische Merkmale ist, der zur Bereitstellung von linguistischen Merkmalen als sekundäre Merkmalmetriken konfiguriert ist.

11. Sprachanalysator nach einem der Ansprüche 1-10, wobei der Sprachanalysator einen Spracherkenner zur Bereitstellung eines Eingangs in den sekundären Merkmalsextrahierer basierend auf den Sprachdaten umfasst.

12. Sprachanalysator nach einem der Ansprüche 1-11, wobei die Sprechermetrik eine Empfindungsmetrik oder eine Charaktermetrik ist.

13. Verfahren zum Bestimmen einer Sprechermetrik, wobei das Verfahren Folgendes umfasst:

Erlangen von Sprachdaten;
Bestimmen von primären Merkmalsmetriken basierend auf den Sprachdaten;
Bestimmen von sekundären Merkmalsmetriken, die den Sprachdaten zugeordnet sind; und
Bestimmen eines Sprecherzustands basierend auf den primären Merkmalsmetriken und den sekundären Merkmalsmetriken,
wobei das Bestimmen einer Sprechermetrik Anwenden eines Sprachmodells umfasst, wobei das Sprachmodell ein neuronales Netz mit einer Anzahl von Modellschichten umfasst, die eine Eingangsschicht, eine oder mehrere Zwischenschichten, die eine erste Zwischenschicht beinhalten, und eine Ausgangsschicht beinhalten, und wobei das Anwenden des Sprachmodells Konditionieren einer Zwischenschicht basierend auf den sekundären Merkmalmetriken zur Bereitstellung eines Eingangs in die Modellschicht nach der Zwischenschicht in dem neuronalen Netz umfasst.

**Revendications**

1. Analyseur de la parole comprenant :

   un module d'entrée pour fournir des données de la parole sur la base d'un signal de la parole ;
   un extracteur de caractéristiques primaires pour fournir des métriques de caractéristiques primaires des données de la parole ;
   un extracteur de caractéristiques secondaires pour fournir des métriques de caractéristiques secondaires associées aux données de la parole ; et
   un module de modèle de la parole comprenant un réseau neuronal avec des couches de modèle comportant une couche d'entrée, une ou plusieurs couches intermédiaires comprenant une première couche intermédiaire, et une couche de sortie pour fournir une métrique de locuteur,
   dans lequel le module de modèle de la parole est configuré pour conditionner une couche intermédiaire sur la base des métriques de caractéristiques secondaires pour fournir une sortie de la couche intermédiaire en tant qu'entrée dans la couche de modèle après la couche intermédiaire dans le réseau neuronal.

2. Analyseur de la parole selon la revendication 1, dans lequel le modèle de la parole comporte une pluralité de couches intermédiaires, et dans lequel le module de modèle de la parole est configuré pour conditionner au moins deux de la pluralité de couches intermédiaires sur la base des métriques de caractéristiques secondaires.

3. Analyseur de la parole selon la revendication 2, dans lequel le modèle de la parole comporte au moins trois couches intermédiaires, et dans lequel le module de modèle de la parole est configuré pour conditionner chacune des couches intermédiaires sur la base des métriques de caractéristiques secondaires.

4. Analyseur de la parole selon la revendication 3, dans lequel les couches intermédiaires du modèle de la parole ont une sortie de même dimension et dans lequel le conditionnement d'une couche intermédiaire comprend l'ajustement de la dimension des métriques de caractéristiques secondaires par une transformation linéaire de coordonnées pour faire correspondre les métriques de caractéristiques secondaires aux sorties des couches intermédiaires.

5. Analyseur de la parole selon l'une quelconque des revendications 1 à 4, dans lequel le module de modèle de la parole est configuré pour conditionner la couche d'entrée sur la base des métriques de caractéristiques secondaires pour fournir une sortie de la couche d'entrée.

6. Analyseur de la parole selon la revendication 5, dans lequel le conditionnement de la couche d'entrée comprend la fusion des métriques de caractéristiques secondaires avec les métriques de caractéristiques primaires pour fournir une entrée au traitement de la couche d'entrée.

7. Analyseur de la parole selon l'une quelconque des revendications 1 à 6, dans lequel le conditionnement d'une couche intermédiaire sur la base des métriques de caractéristiques secondaires comprend la fusion des métriques de caractéristiques secondaires avec une sortie de traitement de couche intermédiaire de la couche intermédiaire pour fournir une sortie de la couche intermédiaire en tant qu'entrée de la couche modèle après la couche intermédiaire dans le réseau neuronal.

8. Analyseur de la parole selon la revendication 7, dans lequel la fusion des métriques de caractéristiques secondaires avec une sortie de traitement de couche intermédiaire de la couche intermédiaire comprend la combinaison d'une première métrique de caractéristiques secondaires des métriques de caractéristiques secondaires avec une première sortie de traitement de couche intermédiaire de la couche intermédiaire pour fournir une première entrée à la couche modèle après la couche intermédiaire, et la combinaison d'une seconde métrique de caractéristiques secondaires des métriques de caractéristiques secondaires avec une seconde sortie de traitement de couche intermédiaire de la couche intermédiaire pour fournir une seconde entrée à la couche modèle après la couche intermédiaire.

9. Analyseur de la parole selon l'une quelconque des revendications 1 à 8, dans lequel l'extracteur de caractéristiques primaires est un extracteur de caractéristiques acoustiques configuré pour fournir des caractéristiques acoustiques en tant que métriques de caractéristiques primaires.

10. Analyseur de la parole selon l'une quelconque des revendications 1 à 9, dans lequel l'extracteur de caractéristiques secondaires est un extracteur de caractéristiques linguistiques configuré pour fournir des caractéristiques linguistiques en tant que métriques de caractéristiques secondaires.

11. Analyseur de la parole selon l'une quelconque des revendications 1 à 10, dans lequel l'analyseur de la parole comprend un dispositif de reconnaissance de la parole pour fournir une entrée à l'extracteur de caractéristiques secondaires sur la base des données de la parole.

12. Analyseur de la parole selon l'une quelconque des revendications 1 à 11, dans lequel la métrique de locuteur est une métrique de sentiment ou une métrique de trait.

13. Procédé de détermination d'une métrique de locuteur, le procédé comprenant :

l'obtention de données de la parole ;
la détermination des métriques de caractéristiques primaires sur la base des données de la parole ;
la détermination des métriques de caractéristiques secondaires associées aux données de la parole ; et
la détermination d'un état de locuteur sur la base des métriques de caractéristiques primaires et des métriques de caractéristiques secondaires,
dans lequel la détermination d'une métrique de locuteur comprend l'application d'un modèle de la parole, le modèle de la parole comprenant un réseau neuronal avec un certain nombre de couches de modèle comportant une couche d'entrée, une ou plusieurs couches intermédiaires comportant une première couche intermédiaire, et une couche de sortie, et dans lequel l'application du modèle de la parole comprend le conditionnement d'une couche intermédiaire sur la base des métriques de caractéristiques secondaires pour fournir une entrée à la couche de modèle après la couche intermédiaire dans le réseau neuronal.

**Fig. 1**

**Fig. 2**

**PFM, X_IN** 16

FF_IN 30

$$x'\_in\_1 = f\_in\_1(PFM\_1, SFM)$$
$$x'\_in\_2 = f\_in\_2(PFM\_2, SFM)$$
$$\vdots$$
$$x'\_in\_NP = f\_in\_NP(PFM\_NP, SFM)$$

**16A SFM**

**PFM', X'_IN**

Input Layer processing 32

**Y_IN**

CF_IN 34

**Y'_IN, X_1**

# Fig. 3

I_L_k

X_k, Y'_k-1

I_L_k processing

38

Y_k

36

SFM

CF_k

Y'_k, X_k+1

**Fig. 4**

100

S102 Obtain speech data

S104 Determine primary feature metrics

S106 Determine secondary feature metrics

S108 Determine speaker metric

S110 Apply speech model

S110A Condition I_L_k

S110B Condition INP_L

S110 Condition OUT_L

S112 Output speaker metric

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017256254 A1, HUANG YAN
- WO 2019246239 A1